# EUROPÄISCHE PATENTANMELDUNG

(11) **EP 4 454 798 A1**
(43) Veröffentlichungstag der Anmeldung: **30.10.2024**
(21) Anmeldenummer: 23170225.9
(22) Anmeldetag: 27.04.2023
(51) Int. Cl.: B23D 61/12

(54) **SÄGEBLATT FÜR GATTERSÄGEN**

(71) Anmelder: Thümmel, Anselm, 17493 Greifswald (DE)
(72) Erfinder: Thümmel, Anselm, 17493 Greifswald (DE)
(74) Vertreter: Gulde & Partner

(57) **Zusammenfassung**

Die Erfindung betrifft ein Sägeblatt (1) für Gattersägen, welches mit als Wendezähnen ausgebildeten Sägezähnen (3) bestückt ist, wobei die Sägezähne (3) am oberen und unteren Totpunkt der Auf- und Abbewegung wenden und so in beiden Schnittrichtungen arbeiten. Das erfindungsgemäße Sägeblatt (1) weist einem Sägeblattgrundkörper (2) und Sägezähne (3) auf, wobei die als Wendezähne ausgebildeten Sägezähne (3) einen Zapfen (4) und rechts und links davon angeordnet und über einen Steg (5) mit Stegsegmenten (5a) verbunden zwei Schenkel (6a) aufweisen und an den Enden der Stegsegmente (5a) Schneidkanten (7a) ausgebildet sind und im Sägeblattgrundkörper (2) zur Aufnahme der Sägezähne (3) Zapfenaussparungen (8) zum Zusammenwirken mit den Zapfen (4) sowie Schenkelaussparungen (9a) zum Zusammenwirken mit den Schenkeln (5a) ausgebildet sind.

## Beschreibung

Die Erfindung betrifft ein Sägeblatt für Gattersägen und ist anwendbar insbesondere in der Holzverarbeitungsindustrie.

Herkömmliche Gattersägen weisen einen rotierenden Antrieb auf, wobei die Rotationsbewegung zu einer Auf- und Abbewegung des Sägeblattes umgesetzt wird. Die Sägeblätter sind traditionell mit einer einseitig arbeitenden Zahnung versehen, sodass sie nur in einer Schnittrichtung, in der Abwärtsbewegung, arbeiten.

Um den Aufwärtsschnitt bei kontinuierlichem Vorschub zu verhindern, werden die Sägeblätter mit einem Überhang im Sägerahmen eingehängt.

Aus der US 334303 A ist ein einsetzbarer oszillierender Sägezahn für Kappsägen bekannt, der in eine Ausnehmung im Sägeblatt eingesetzt und mit Einstellvorrichtungen, Platten und Nieten positioniert wird.

Der Erfindung liegt die Aufgabe zugrunde, ein Sägeblatt für eine Gattersäge zu schaffen, welches in beiden Schnittrichtungen, also in der Auf- und der Abbewegung ohne Überhang arbeiten kann und eine größere Vorschubgeschwindigkeit ermöglicht.

Diese Aufgabe wird gelöst durch die Merkmale im Anspruch 1. Zweckmäßige Ausgestaltungen der Erfindung sind in den Unteransprüchen enthalten.

Ein besonderer Vorteil der Erfindung besteht darin, dass das Sägeblatt in beiden Schnittrichtungen schneiden kann, indem das Sägeblatt mit als Wendezähnen ausgebildeten Sägezähnen bestückt ist, wobei die Sägezähne am oberen und unteren Totpunkt der Auf- und Abbewegung wenden und so in beiden Schnittrichtungen arbeiten.

Ein weiterer Vorteil der Erfindung besteht in dem einfachen und unkomplizierten Aufbau des Sägeblatts, wobei das Sägeblatt einen Sägeblattgrundkörper und Sägezähne aufweist, und die als Wendezähne ausgebildeten Sägezähne einen Zapfen und rechts und links davon angeordnet und über einen Steg mit Stegsegmenten verbunden zwei Schenkel aufweisen und an den Enden der Stegsegmente Schneidkanten ausgebildet sind und im Sägeblattgrundkörper zur Aufnahme der Sägezähne Zapfenaussparungen zum Zusammenwirken mit den Zapfen sowie Schenkelaussparungen zum Zusammenwirken mit den Schenkeln ausgebildet sind.

Ein zusätzlicher Vorteil der Erfindung besteht darin, dass das Sägeblatt nicht geschränkt werden muss, da die Stärke der Sägezähne in ihrem dreischichtigen Aufbau größer ist als die Dicke des Sägeblattgrundkörpers. Dies führt zu einer besonders glatten Schnittfläche. Die Sägezähne sind dreischichtig gefertigt derart, dass der Steg als Mittelschicht eine Achse bildet und rechts und links davon angeordnet zwei Deckschichten den Sägezahn seitlich fixieren.

Eine optimale Anordnung der Sägezähne wird erreicht, indem am oberen und unteren Ende des Sägeblattgrundkörpers die Schenkelaussparungen jeweils zur Aufnahme eines Schenkels und dazwischen weitere Schenkelaussparungen zur Aufnahme jeweils zweier Schenkel ausgebildet sind und dass die Zahnteilung T mindestens die Zahnbreite b beträgt.

Weitere Vorteile der Erfindung resultieren daraus, dass bei der Montage die Sägezähne mit den Schenkeln und dem Zapfen in die dafür vorgesehenen Aussparungen eingesetzt werden und im Sägebetrieb die Sägezähne durch ihre Schwerkraft oder die einwirkenden Spanungskräfte an einem Kipppunkt K verkippen und sich hierdurch fixieren.

Der Zapfen weist hierbei Abflachungen und die Zapfenaussparung Vertiefungen auf.

Die Erfindung wird nachfolgend anhand von zumindest teilweise in den Figuren dargestellten Ausführungsbeispielen näher erläutert.

### Die Figuren zeigen:

- Figur 1: einen Ausschnitt des erfindungsgemäßen Sägeblattes mit zwei Sägezähnen,
- Figur 2: den dreischichtigen Aufbau des Sägezahns,
- Figur 3: das Verhältnis von Zahnteilung T zu Zahnbreite b,
- Figur 4a: den Sägeblattausschnitt in einer ersten Schnittrichtung,
- Figur 4b: den Sägeblattausschnitt in einer zweiten Schnittrichtung,
- Figur 5: den Zahnwechsel, und
- Figur 6: den Verlauf der Sägebewegung.

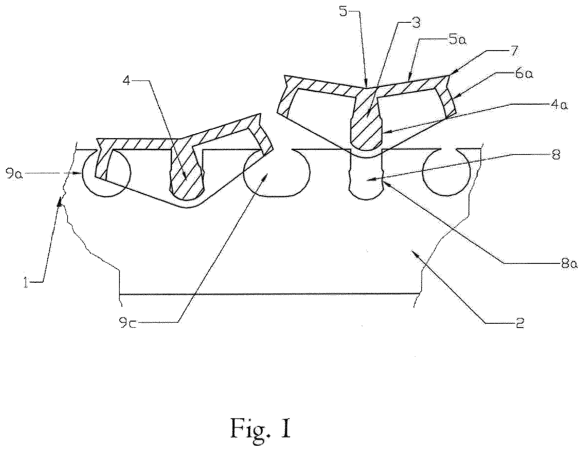

Wie aus Figur 1 zu ersehen, weist das Sägeblatt 1 einen Sägeblattgrundkörper 2 und symmetrisch aufgebaute Sägezähne 3 auf. Die Anzahl der Sägezähne ist abhängig von der Länge des Sägeblattgrundkörpers 2 und der Zahnteilung. Die als Wendezähne ausgebildeten Sägezähne 3 weisen einen Zapfen 4 und rechts und links davon angeordnet und über einen Steg 5 mit Stegsegmenten 5a verbunden zwei Schenkel 6a auf. An den Enden der Stegsegmente 5a sind Schneidkanten 7 ausgebildet. Im Sägeblattgrundkörper 2 sind zur Aufnahme der Sägezähne 3 Zapfenaussparungen 8 zum Zusammenwirken mit den Zapfen 4 sowie Schenkelaussparungen 9a, 9c zum Zusammenwirken mit den Schenkeln 5a ausgebildet.

Der links dargestellte Sägezahn 3 ist bereits mit dem Zapfen 4 in die Zapfenaussparung 8 und mit den Schenkeln 5a in die Schenkelaussparungen 9a eingeführt, während der rechts dargestellte Sägezahn 3 zur Einführung vorbereitet ist.

An den Zapfen 4 sind die Abflachungen 4a und in der Zapfenaussparung 8 die Vertiefungen 8a zu erkennen. Im Sägebetrieb verkippen die Sägezähne 3 und werden durch das Zusammenwirken der Abflachungen 4a mit den Vertiefungen 8a fixiert. Die Zapfenaussparung 8 kann auch ohne Vertiefung 8a, die eine bessere Fixierung des Sägezahns 3 im gekippten Zustand bewirkt, ausgeführt werden.

Der Zapfen 4 ist im vorliegenden Ausführungsbeispiel an seinem unteren Ende kreisförmig ausgebildet, und auch die Zapfenaussparung 8 ist im unteren Bereich kreisförmig. Die Schenkelaussparungen 9a sind im vorliegenden Ausführungsbeispiel kreisförmig und die Schenkelaussparung 9c oval ausgebildet.

Zwischen den Sägezähnen 3 befindet sich die Schenkelaussparung 9c, welche der Aufnahme der Schenkel 6a der Sägezähne 3 dient. Die zwischen den Sägezähnen 3 angeordnete Schenkelaussparung 9c ist deshalb größer ausgebildet als die Schenkelaussparungen 9a. Die Breite der Schenkelaussparung 9c richtet sich nach der Sägezahnbreite b und der Zahnteilung T. Die Schenkel 6a haben die Aufgabe ein Eindringen von Sägespänen in den Raum zwischen Sägeblattgrundkörper 2 und Sägezahn 3 zu verhindern.

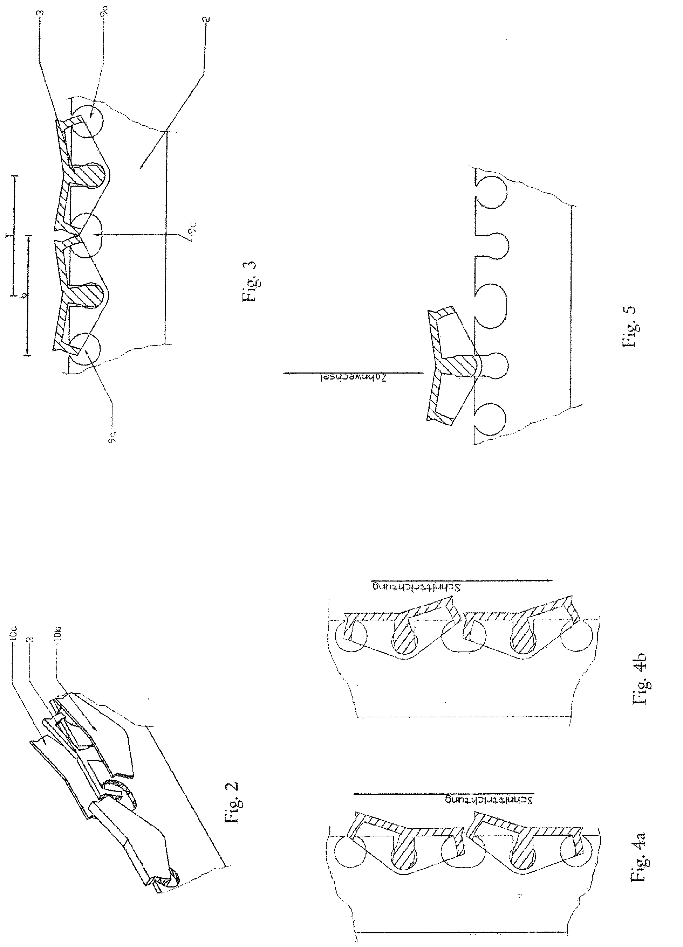

Figur 2 zeigt den dreischichtigen Aufbau des Sägezahns 3. Der Steg 5 bildet als Mittelschicht eine Achse, und rechts und links davon sind zwei Deckschichten 10a und 10b angeordnet, die den Sägezahn 3 seitlich fixieren.

Die Stärke der Sägezähne 3 ist somit in ihrem dreischichtigen Aufbau größer als die Dicke des Sägeblattgrundkörpers 2. Dies bewirkt, dass die Säge nicht geschränkt werden muss und eine glatte Schnittfläche gewährleistet.

Figur 3 zeigt das Verhältnis von Zahnteilung T zu Zahnbreite b, wobei die Zahnteilung T mindestens die Zahnbreite b beträgt.

Figur 4a zeigt den Sägeblattausschnitt in einer ersten Schnittrichtung und insbesondere die aufgerichtete Position der Schneidkanten 7. Ebenso zu ersehen ist die unterschiedliche Höhe der Schenkel 6a und somit der Schneidkante 7.

Bei der Darstellung gemäß Figur 4b ist es genau umgekehrt. Figur 4b zeigt den Sägeblattausschnitt in seiner zweiten Schnittrichtung und insbesondere die aufgerichtete Position der Schneidkanten 7.

Figur 5 zeigt den Zahnwechsel, indem der Sägezahn 3 in eine exakt waagerechte Position zum Sägeblattgrundkörper 2 gebracht und dann einfach der Zapfen 4 aus der Zapfenaussparung 8 und die Schenkel 6a aus den Schenkelaussparungen 9a herausgezogen werden. Die Abflachungen 4a am Zapfen 4 sind hierbei nicht im Eingriff mit den Vertiefungen 8a in der Zapfenaussparung 8.

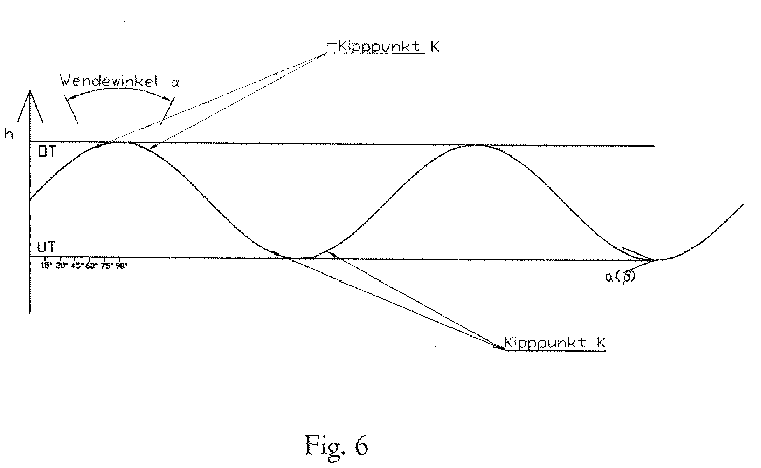

In Figur 6 ist der Verlauf der Sägebewegung dargestellt. Die Sägebewegung im Bezug zum Werkstück ist eine Sinuskurve mit oberem Totpunkt OT und unterem Totpunkt UT. Ebenso dargestellt ist in dem Kurvenverlauf der Wendewinkel α und der Kipppunkt K. In dem Koordinatensystem ist a der Vorschub des Werkstücks und h die Hubhöhe des Gatterrahmens.

Die Erfindung ist nicht beschränkt auf die dargestellten Ausführungsvarianten. Vielmehr ist es möglich, durch Kombination und Variation der aufgezeigten Mittel und Merkmale weitere Ausführungsvarianten zu realisieren, ohne den Rahmen der Erfindung zu verlassen.

### Bezugszeichen

- 1: Sägeblatt
- 2: Sägeblattgrundkörper
- 3: Sägezahn, Wendezahn
- 4: Zapfen
- 4a: Abflachungen
- 5: Steg
- 5a: Stegsegmente
- 6a: Schenkel
- 7: Schneidkanten
- 8: Zapfenaussparungen
- 8a,: Vertiefungen
- 9a, 9c: Schenkelaussparungen
- 10a,10b: Deckschichten
- T: Zahnteilung
- b: Zahnbreite
- K: Kipppunkt
- α: Wendewinkel
- a: Vorschub Werkstück
- h: Hubhöhe Gatterrahmen

## Patentansprüche

1. Sägeblatt (1) für Gattersägen, **dadurch gekennzeichnet, dass** das Sägeblatt (1) mit als Wendezähnen ausgebildeten Sägezähnen (3) bestückt ist, wobei die Sägezähne (3) am oberen und unteren Totpunkt der Auf- und Abbewegung wenden und so in beiden Schnittrichtungen arbeiten.

2. Sägeblatt (1) nach Anspruch 1, **dadurch gekennzeichnet, dass** das Sägeblatt (1) einem Sägeblattgrundkörper (2) und Sägezähne (3) aufweist, wobei die als Wendezähne ausgebildeten Sägezähne (3) einen Zapfen (4) und rechts und links davon angeordnet und über einen Steg (5) mit Stegsegmenten (5a) verbunden zwei Schenkel (6a) aufweisen und an den Enden der Stegsegmente (5a) Schneidkanten (7) ausgebildet sind und im Sägeblattgrundkörper (2) zur Aufnahme der Sägezähne (3) Zapfenaussparungen (8) zum Zusammenwirken mit den Zapfen (4) sowie Schenkelaussparungen (9a) zum Zusammenwirken mit den Schenkeln (5a) ausgebildet sind.

3. Sägeblatt (1) nach Anspruch 1 oder 2, **dadurch gekennzeichnet, dass** die Sägezähne (3) dreischichtig gefertigt sind, wobei der Steg (5) mit dem Zapfen (4) als Mittelschicht eine Achse bildet und rechts und links davon angeordnet zwei Deckschichten (10a, 10b) den Sägezahn (3) seitlich fixieren.

4. Sägeblatt (1) nach einem der voranstehenden Ansprüche, **dadurch gekennzeichnet, dass** die Stärke der Sägezähne (3) in ihrem dreischichtigen Aufbau größer ist als die Dicke des Sägeblattgrundkörpers (2).

5. Sägeblatt (1) nach Anspruch 2, **dadurch gekennzeichnet, dass** am oberen und unteren Ende des Sägeblattgrundkörpers (2) die Schenkelaussparungen (9a) jeweils zur Aufnahme eines Schenkels (5a) und dazwischen Schenkelaussparungen (9c) zur Aufnahme jeweils zweier Schenkel (5a) ausgebildet sind.

6. Sägeblatt (1) nach einem der voranstehenden Ansprüche, **dadurch gekennzeichnet, dass** bei der Montage die Sägezähne (3) mit den Schenkeln (5a) und dem Zapfen (4) in die dafür vorgesehenen Aussparungen (9a, 9c, 8) eingesetzt werden und im Sägebetrieb die Sägezähne (3) durch ihre Schwerkraft oder die einwirkenden Spanungskräfte an einem Kipppunkt (K) verkippen und sich hierdurch fixieren.

7. Sägeblatt (1) nach einem der voranstehenden Ansprüche, **dadurch gekennzeichnet, dass** der Zapfen (4) Abflachungen (4a) und die Zapfenaussparung (8) Vertiefungen (8a) aufweisen.
